# EUROPEAN PATENT APPLICATION

(11) **EP 4 760 613 A1**
(43) Date of publication of application: **17.06.2026**
(21) Application number: 25220704.8
(22) Date of filing: 04.12.2025
(51) Int. Cl.: G06Q 10/06, E21B 41/00, G06Q 50/02, H04L 67/125

(54) **MANAGEMENT APPARATUS, MANAGEMENT METHOD, AND MANAGEMENT PROGRAM**

(30) Priority: 10.12.2024 JP 2024215493
(71) Applicant: Yokogawa Electric Corporation, Musashino-shi, Tokyo 180-8750 (JP)
(72) Inventor: TSUBOTA, Ichiro, Musashino-shi, Tokyo 180-8750 (JP); YAMAGATA, Takashi, Musashino-shi, Tokyo 180-8750 (JP)
(74) Representative: Winter, Brandl - Partnerschaft mbB

(57) **Abstract**

A management apparatus (10) acquires an information model that is obtained by structuring pieces of equipment data related to one or more pieces of subsea equipment (40) installed on the seabed, converts the acquired information model to an information model generated in a predetermined file format in which a controller (30) that controls one or more pieces of the subsea equipment (40) is able to read and write, and releases the converted information model to the controller (30).

## Description

### FIELD

The present disclosure relates to a management apparatus, a management method, and a management program.

### BACKGROUND

Various kinds of subsea equipment that are used to produce petroleum or natural gas are connected to a management apparatus in which Supervisory Control And Data Acquisition (SCADA) software is installed and a controller, such as a Master Control Station (MCS) or Distributed Control System (DCS). Data transmitted from each of the pieces of subsea equipment is processed by the SCADA software installed in the management apparatus and, as a result of this, the data is converted to data that the controller is able to read and write. The controller controls the pieces of subsea equipment via the SCADA software installed in the management apparatus on the basis of the converted data (see, for example, Japanese Laid-open Patent Publication No. 2003-256972).

However, in the above described technology, it is difficult to improve efficiency of building and modifying the entire management system including the pieces of subsea equipment and the controller. For example, in the above described technology, the data transmitted from each of the pieces of subsea equipment is transmitted by using various kinds of communication protocols, so that there is a need to install a program for receiving this type of data. Furthermore, in the above described technology, the data transmitted from the pieces of subsea equipment is transmitted by using various kinds of file formats, so that there is a need to install a program for converting and unifying this type of data.

Accordingly, the present disclosure has been conceived in light of the circumstances described above and an object thereof is to improve efficiency of building and modifying the entire management system that includes pieces of subsea equipment and a controller.

### SUMMARY

According to an aspect of the embodiments, a management apparatus includes a processor, wherein the processor executes a process of acquiring a first information model that is obtained by structuring pieces of equipment data related to one or more pieces of subsea equipment installed on the seabed, converting the acquired first information model to a second information model generated in a predetermined file format in which a controller that controls the subsea equipment is able to read and write, and releasing the converted second information model to the controller.

According to an aspect of the embodiments, a management method that causes a management apparatus to execute a process, the process includes acquiring a first information model that is obtained by structuring pieces of equipment data related to one or more pieces of subsea equipment installed on the seabed, converting the acquired first information model to a second information model generated in a predetermined file format in which a controller that controls the subsea equipment is able to read and write, and releasing the converted second information model to the controller.

According to an aspect of the embodiments, a management program that causes a management apparatus to execute a process, the process includes acquiring a first information model that is obtained by structuring pieces of equipment data related to one or more pieces of subsea equipment installed on the seabed, converting the acquired first information model to a second information model generated in a predetermined file format in which a controller that controls the subsea equipment is able to read and write, and releasing the converted second information model to the controller.

### BRIEF DESCRIPTION OF THE DRAWINGS

FIG. 1 is a diagram illustrating a configuration example and a process example related to a subsea equipment management system according to an embodiment;
FIG. 2 is a block diagram illustrating an example of a configuration of each device included in the subsea equipment management system according to the embodiment;
FIG. 3 is a diagram illustrating one example of a first information model storage unit included in a management apparatus according to the embodiment;
FIG. 4 is a diagram illustrating one example of a second information model storage unit included in the management apparatus according to the embodiment;
FIG. 5 is a diagram illustrating a specific example of each process performed in the subsea equipment management system according to a reference technology;
FIG. 6 is a diagram illustrating a specific example of each of the processes performed in the subsea equipment management system according to the embodiment;
FIG. 7 is a flowchart illustrating one example of the overall flow of the process performed in the subsea equipment management system according to the embodiment;
FIG. 8 is a flowchart illustrating one example of the flow of a data acquisition process performed in the subsea equipment management system according to the embodiment;
FIG. 9 is a flowchart illustrating one example of the flow of a data conversion process performed in the subsea equipment management system according to the embodiment;
FIG. 10 is a flowchart illustrating one example of the flow of a data release process performed in the subsea equipment management system according to the embodiment; and
FIG. 11 is a diagram illustrating an example of a hardware configuration according to the embodiment.

### DETAILED DESCRIPTION OF THE PREFERRED EMBODIMENTS

Hereinafter, preferred embodiments of a management apparatus, a management method, and a management program according to one embodiment of the present disclosure will be explained in detail below with reference to the accompanying drawings. Furthermore, the present disclosure is not limited to the embodiments described below.

In the following, a configuration and a process related to a subsea equipment management system 100 according to the embodiment, a configuration and a process related to each device included in the subsea equipment management system 100, the flow of each process performed in the subsea equipment management system 100, and effects of the embodiment will be described.

### 1. Configuration and process related to subsea equipment management system 100

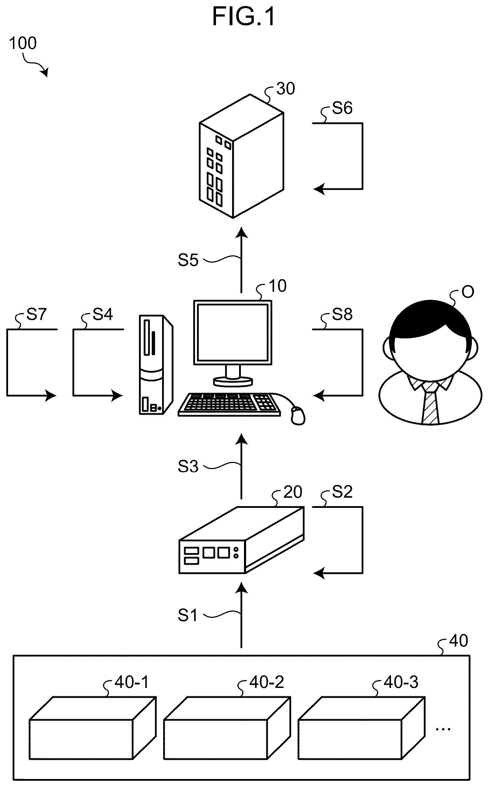

A configuration and a process related to the subsea equipment management system 100 according to the embodiment will be described with reference to FIG. 1. FIG. 1 is a diagram illustrating a configuration example and a process example related to the subsea equipment management system 100 according to the embodiment. In the following, an example of the overall configuration of the subsea equipment management system 100, an example of a process performed in the subsea equipment management system 100, and the effects of the subsea equipment management system 100 will be described.

Moreover, in the embodiment, one example of management of a production facility that produces petroleum or natural gas will be described, but a purpose of use, a field of application field, or the like is not particularly limited, and, the example may also be used to investigate, monitor, or the like, for example, a mineral, a living thing, a relic, or the like on the seabed.

### 1-1. Example of overall configuration of subsea equipment management system 100

An example of the overall configuration of the subsea equipment management system 100 will be described. The subsea equipment management system 100 is constituted by a management apparatus 10, a subsea gateway 20, a controller 30, and subsea equipment 40. Here, the management apparatus 10, the subsea gateway 20, the controller 30, and the subsea equipment 40 are communicably connected in a wired or wireless manner via a predetermined communication network that is not illustrated. Moreover, for the predetermined communication network, various kinds of communication networks, such as the Internet or a dedicated line, may be used.

### 1-1-1. Management apparatus 10

The management apparatus 10 is an administrator terminal that is used by an operator O who is an administrator of a production facility of petroleum or natural gas. For example, the management apparatus 10 is installed in a vessel, an offshore facility, or a land facility, and is operated by the operator O. Moreover, in the subsea equipment management system 100 illustrated in FIG. 1, one or more of the management apparatuses 10 may be included. Furthermore, in the example illustrated in FIG. 1, a case in which the management apparatus 10 is implemented by a desktop personal computer (PC) is illustrated, but the management apparatus 10 may also be implemented by a notebook personal computer (PC), a smartphone, a server device, a cloud system, or the like.

### 1-1-2. Subsea gateway 20

The subsea gateway 20 is a communication device that generates an information model I1 of the subsea equipment 40 on the basis of the pieces of equipment data collected from the subsea equipment 40. For example, the subsea gateway 20 generates the information model I1 (XML) that has been generated in a file format based on Extensible Markup Language (XML) or the like and that has been unified by offshore oil drilling industries. Here, the file format to be used may be, for example, a file format of XML, Comma-Separated Values (CSV), Structured Query Language (SQL), JavaScript (JSON (registered trademark) Object Notation), or the like, but is not particularly limited by the examples. Moreover, the file format is preferably be an XML file format. Moreover, in the subsea equipment management system 100 illustrated in FIG. 1, one or more of the subsea gateways 20 may be included.

### 1-1-3. Controller 30

The controller 30 is a device that controls the subsea equipment 40. For example, the controller 30 is a MCS or a DCS that is installed in a vessel or an offshore facility, and that controls the subsea equipment 40 via the management apparatus 10 or the subsea gateway 20. Moreover, in the subsea equipment management system 100 illustrated in FIG. 1, one or more of the controllers 30 may be included.

### 1-1-4. Subsea equipment 40

The subsea equipment 40 (40-1, 40-2, 40-3, and ... ) is equipment that is used in the production facility for producing petroleum or natural gas. For example, the subsea equipment 40 is equipment that is installed in the production facility for producing a subsea completion well, a pipeline, a manifold, or the like, and is an electronic module, such as a seabed resource production valve or a seabed resource production motor, that is used on the seabed.

### 1-2. Example of overall process performed in subsea equipment management system 100

An example of the overall process performed in the subsea equipment management system 100 will be described. Moreover, the processes performed at Steps S1 to S8 described below may be performed in different order. Furthermore, some of the processes performed at Steps S1 to S8 described below may be omitted.

### 1-2-1. Equipment data collection process

At a first step, the subsea gateway 20 performs an equipment data collection process (Step S1). For example, the subsea gateway 20 collects the pieces of equipment data that have been transmitted by the subsea equipment 40 (40-1, 40-2, 40-3, and ... ).

The equipment data mentioned here is data that indicates identification information and a state related to the subsea equipment 40 and is, for example, the identification information that includes the type (for example, a valve or a motor) and the identification number of the subsea equipment 40, and the state of the subsea equipment 40 including a status indicating whether or not a warning (alarm) about the subsea equipment 40 is issued, an operational status, an operating status (for example, a degree of opening/closing of the valve), or the like of the subsea equipment 40.

### 1-2-2. Information model generation process

At a second step, the subsea gateway 20 performs an information model generation process (Step S2). For example, the subsea gateway 20 structures the pieces of equipment data collected from the subsea equipment 40 (40-1, 40-2, 40-3, and ... ), and generates the information model I1 (XML).

The information model I1 mentioned here is data that is obtained by structuring the identification information and the state related to the subsea equipment 40, and is formed to have a data structure in which, for example, the identification information and the state related to the subsea equipment 40 are being represented by being divided into an upper level structure and a lower level structure by using a period (dot).

### 1-2-3. Information model acquisition process

At a third step, the management apparatus 10 performs an information model acquisition process (Step S3). For example, the management apparatus 10 acquires the information model I1 (XML) that has been generated by the subsea gateway 20.

### 1-2-4. First information model conversion process

At a fourth step, the management apparatus 10 performs a first information model conversion process (Step S4). For example, the management apparatus 10 converts the acquired information model I1 (XML) into an information model I2 (CSV) generated in a file format, such as a CSV file format, in which the controller 30 is able to read and writes (for example, a CSV, XML, SQL, or JSON file format may be exemplified, but the example is not particularly limited. Moreover, the file format is preferably be a CSV format.). At this time, in the subsea equipment management system 100, it is possible to use a tool conforming to the Open Platform Communications (OPC) 30020 MCS DCS Interface Standardization (MDIS) OPC- Unified Architecture (UA) companion specification that is the standard specification. The above described tool is software conforming to the OPC 30020 MDIS OPC-UA companion specification. Furthermore, the above described tool is software referred to as an integrated information server.

### 1-2-5. Conversion information model release process

At a fifth step, the management apparatus 10 performs a conversion information model release process (Step S5). For example, the management apparatus 10 releases the converted information model I2 (CSV) to the controller 30.

### 1-2-6. Information model detection and update process

At a sixth step, the controller 30 performs an information model update and detection process (Step S6). For example, the controller 30 connects to the released information model I2 (CSV), and detects an update of the information model I2 (CSV). Furthermore, the controller 30 is able to perform a process of writing data to the released information model I2 (CSV) at regular intervals, at a timing determined by a program that has been constructed in the controller 30, or at an arbitrary timing determined by the operator O who operates the controller 30, and is able to transmit new data to the subsea equipment 40 (40-1, 40-2, 40-3, and ... ) via the management apparatus 10 or the subsea gateway 20. Furthermore, regarding all of the pieces of data or specific data included in the information model I2 (CSV), the management apparatus 10 is able to prevent the controller 30 from detecting an update of data, and is also able to ignore writing of the update data to be performed from the controller 30. Furthermore, the management apparatus 10 performs a process of writing data with respect to the data that is included in the information model I1 (XML) stored in the subsea gateway 20 and that corresponds to all of the pieces of data or the specific data included in the information model I2 (CSV) that has been updated as a result of the update data being written by the controller 30. Furthermore, the subsea gateway 20 performs a process of writing data with respect to the data that is stored in in the subsea equipment 40 (40-1, 40-2, 40-3, and ... ) that corresponds to the data that is stored in the information model I1 (XML) and that has been updated as a result of the update data being written by the management apparatus 10.

### 1-2-7. Second information model conversion process

At a seventh step, the management apparatus 10 performs a second information model conversion process (Step S7). For example, the management apparatus 10 converts the acquired information model I1 (XML) into the information model I2 (IG) that is generated in a graphic file format supported by the controller 30. The information model I2 (IG) generated in the graphic file format is a file in an XML format that is different from the XML format that has been used for the file transmitted by the subsea gateway 20.

### 1-2-8. Conversion information model display process

At an eighth step, the management apparatus 10 performs a conversion information model display process (Step S8). For example, the management apparatus 10 displays the information model I2 (IG) generated in the converted graphic file format as an Instrument Graphic (IG) by representing the equipment data collected from the subsea equipment 40 into a graphic on a display. At this time, in the subsea equipment management system 100, an integrated information server that is the software conforming to the OPC 30020 MDIS OPC-UA companion specification that is the standard specification.

### 1-3. Effects of subsea equipment management system 100

In the following, a problem in a subsea equipment management system 100-P according to the reference technology will be described, and then, effects of the subsea equipment management system 100 will be described.

### 1-3-1. Problem in subsea equipment management system 100-P

Firstly, in the subsea equipment management system 100-P, the various kinds of subsea equipment 40 use various kinds of communication protocols that are not supported by the controller 30 that is a higher level system, so that there is a need to implement communication between the controller 30 and the subsea equipment 40 by installing a communication broker, that is, by performing programming.

Secondly, in the subsea equipment management system 100-P, the various kinds of subsea equipment 40 transmit data that is generated in various kinds of file formats that are not supported by the controller 30 that is a higher level system, so that there is a need to implement transmission and reception of data between the controller 30 and the subsea equipment 40 by installing a data converter, that is, by performing programming.

Thirdly, in the subsea equipment management system 100-P, there is a need for the subsea equipment 40 to generate, that is, to perform manual engineering on, tags (for example, a degree of opening/closing of a valve) one by one included in the various kinds of subsea equipment 40 associated with various kinds of items (for example, a valve) one by one such that the controller 30 that is the higher level system is able to respond.

As described above, the subsea equipment management system 100-P is inefficient in terms of cost and time, and there is a problem in that it is difficult to improve efficiency of building and modifying the subsea equipment management system 100 that includes the subsea equipment 40 and the controller 30.

### 1-3-2. Outline of subsea equipment management system 100

In the subsea equipment management system 100, by converting the file format of the information model I1 that has been generated by the subsea gateway 20, the information model I1 is converted to the information model I2 that is generated in the file format supported by the controller 30 that is the higher level system without the need for programming, the pieces of equipment data collected from the subsea equipment 40 are stored in the converted information model I2, and the controller 30 is made to read and write with respect to the stored equipment data. At this time, in the subsea equipment management system 100, by using the integrated information server that is the software conforming to the OPC 30020 MDIS OPC-UA companion specification that is the standard specification, the information model I1 that has been generated by the subsea gateway 20 is converted to the information model I2 generated in the file format in which the controller 30 is able to read and write while maintaining the data structure.

### 1-3-3. Effects of subsea equipment management system 100

As a first effect, in the subsea equipment management system 100, it is possible to implement communication between the controller 30 and the subsea equipment 40 without installing a communication broker, that is, without performing programming.

As a second effect, in the subsea equipment management system 100, it is possible to implement transmission and reception of data between the controller 30 and the subsea equipment 40 without installing a data converter, that is, without performing programming.

As a third effect, in the subsea equipment management system 100, there is no need to generate, that is, perform manual engineering on, tags one by one associated with items included in the various kinds of subsea equipment 40 one by one.

As described above, in the subsea equipment management system 100, it is possible to solve inefficiency in terms of cost and time, and it is possible to improve efficiency of building and modifying the subsea equipment management system 100 that includes the subsea equipment 40 and the controller 30.

### 2. Configuration and process related to each device included in subsea equipment management system 100

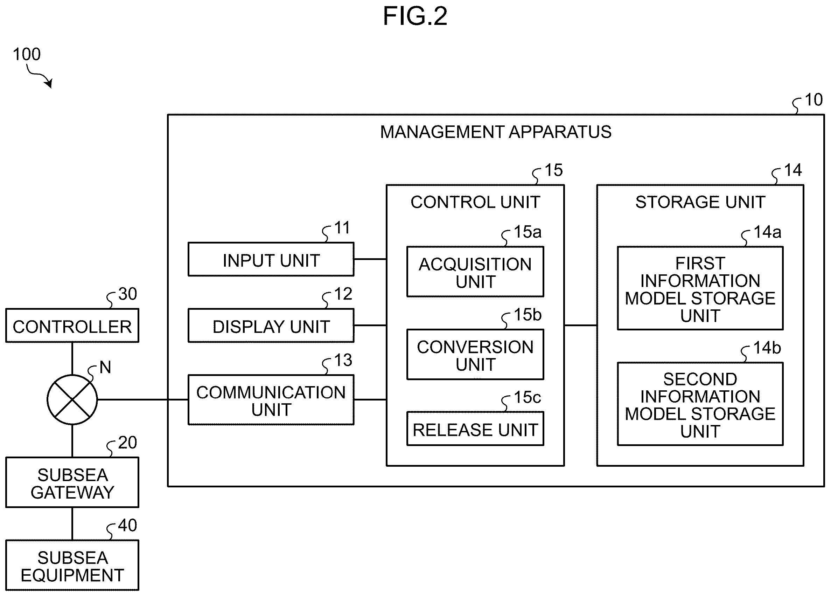

A configuration and a process related to each of the devices included in the subsea equipment management system 100 illustrated in FIG. 1 will be described with reference to FIG. 2 to FIG. 4. In the following, an example of the overall configuration related to the subsea equipment management system 100 according to the embodiment, a configuration example and a process example related to the management apparatus 10, a configuration example and a process example related to the subsea gateway 20, a configuration example and a process example related to the controller 30, and a configuration example and a process example related to the subsea equipment 40 will be described.

### 2-1. Example of overall configuration of subsea equipment management system 100

An example of the overall configuration of the subsea equipment management system 100 illustrated in FIG. 1 will be described with reference to FIG. 2. FIG. 2 is a block diagram illustrating an example of a configuration of each of the devices included in the subsea equipment management system 100 according to the embodiment. As illustrated in FIG. 2, the subsea equipment management system 100 is constituted by the management apparatus 10, the subsea gateway 20, the controller 30, and the subsea equipment 40. Furthermore, the management apparatus 10 is communicably connected by using a communication network N that is implemented by the Internet, a dedicated line, or the like.

### 2-2. Configuration example and process example related to management apparatus 10

A configuration example and a process example related to the management apparatus 10 will be described with reference to FIG. 2. The management apparatus 10 includes an input unit 11, a display unit 12, a communication unit 13, a storage unit 14, and a control unit 15.

### 2-2-1. Input unit 11

The input unit 11 manages an input of various kinds of information with respect to the management apparatus 10. For example, the input unit 11 is implemented by a mouse, a keyboard, and the like, and receives an input of various kinds of information with respect to the management apparatus 10.

### 2-2-2. Display unit 12

The display unit 12 manages a display of various kinds of information received from the management apparatus 10. For example, the display unit 12 is implemented by a display, a speaker, and the like, and displays various kinds of information stored in the management apparatus 10.

### 2-2-3. Communication unit 13

The communication unit 13 manages data communication performed with the other devices. For example, the communication unit 13 performs data communication with each of the communication devices via a router, or the like. Furthermore, the communication unit 13 is able to perform data communication with a terminal that is used by an operator (not illustrated).

### 2-2-4. Storage unit 14

The storage unit 14 stores therein various kinds of information referred to by the control unit 15 when the control unit 15 operates, and various kinds of information that have been acquired when the control unit 15 operates. The storage unit 14 is constituted by a first information model storage unit 14a and a second information model storage unit 14b. Here, the storage unit 14 is implemented by, for example, a semiconductor memory device, such as a random access memory (RAM) or a flash memory, or a storage device, such as a hard disk or an optical disk. Moreover, in the example illustrated in FIG. 2, the storage unit 14 is installed in the management apparatus 10; however, the storage unit 14 may be installed outside the management apparatus 10, or a plurality of storage units may be installed.

### 2-2-4-1. First information model storage unit 14a

The first information model storage unit 14a stores therein the information model I1. For example, the first information model storage unit 14a stores therein the information model I1 that has been acquired by an acquisition unit 15a that will be described later and that is included in the control unit 15.

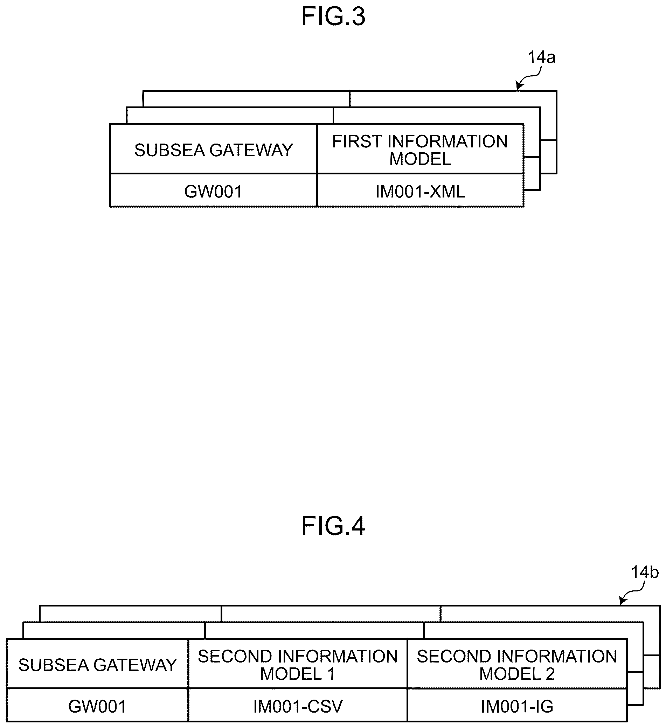

In the following, one example of the data stored in the first information model storage unit 14a will be described with reference to FIG. 3. FIG. 3 is a diagram illustrating one example of the first information model storage unit 14a included in the management apparatus 10 according to the embodiment. In the example illustrated in FIG. 3, the first information model storage unit 14a includes items of a "subsea gateway" and a "first information model".

The "subsea gateway" indicates identification information for identifying the subsea gateway 20 that has generated the information model I1, and is, for example, an identification number or an identification symbol of the subsea gateway 20. The "first information model" is data that is obtained by structuring the identification information and the state related to the subsea equipment 40, and is formed to have a data structure that is generated in the file format, such as an XML file format, and in which, for example, the identification information and the state related to the subsea equipment 40 are represented by being divided into an upper level structure and a lower level structure by using a period (dot) (for example, an XML, CSV, SQL, and JSON file format may be exemplified, but the example is not particularly limited. Moreover, the file format is preferably be an XML file format.).

In other words, FIG. 3 illustrates an example in which the first information model storage unit 14a stores therein data of {the first information model: "IM001-XML"} as the information model I1 that has been generated by the subsea gateway 20 that is identified by "GW001".

### 2-2-4-2. Second information model storage unit 14b

The second information model storage unit 14b stores therein the information model I2. For example, the second information model storage unit 14b stores therein the information model I2 that has been converted by a conversion unit 15b that will be described later and that is included in the control unit 15.

In the following, one example of the data stored by the second information model storage unit 14b will be described with reference to FIG. 4. FIG. 4 is a diagram illustrating one example of the second information model storage unit 14b included in the management apparatus 10 according to the embodiment. In the example illustrated in FIG. 4, the second information model storage unit 14b includes items of a "subsea gateway", a "second information model 1", and a "second information model 2".

The "subsea gateway" indicates identification information for identifying the subsea gateway 20 that has generated the information model I1, and is, for example, an identification number or an identification symbol of the subsea gateway 20. The "second information model 1" is data obtained by structuring the identification information and the state related to the subsea equipment 40, and is formed to have a data structure that is generated in the file format, such as a CSV file format, and in which, for example, the identification information and the state related to the subsea equipment 40 are represented by being divided into an upper level structure and a lower level structure (for example, a CSV, XML, SQL, or JSON format may be exemplified, but the example is not particularly limited. Moreover, the file format is preferably be a CSV file format.). The "second information model 2" is data obtained by structuring the identification information and the state related to the subsea equipment 40, and is formed to have a data structure that is generated in a graphic file format, and in which, for example, the identification information and the state related to the subsea equipment 40 are represented by being divided into an upper level structure and a lower level structure. Furthermore, the second information model I2 is a data structure generated in a predetermined file format stored as the data that is able to be updated by the controller 30.

In other words, FIG. 4 illustrates an example in which the second information model storage unit 14b stores therein data of {the second information model 1: "IM001-CSV", and the second information model 2: "IM001-IG"} as the information model I2 that is obtained by converting the information model I1 that has been generated by the subsea gateway 20 that is identified by "GW001".

### 2-2-5. Control unit 15

The control unit 15 manages the overall control of the management apparatus 10. The control unit 15 is constituted by the acquisition unit 15a, the conversion unit 15b, and a release unit 15c. Here, the control unit 15 is implemented by, for example, an electronic circuit, such as a central processing unit (CPU) or a micro processing unit (MPU), or an integrated circuit, such as an application specific integrated circuit (ASIC) or a field programmable gate array (FPGA).

### 2-2-5-1. Acquisition unit 15a

The acquisition unit 15a acquires various kinds of information. Moreover, the acquisition unit 15a stores the acquired various kinds of information in the storage unit 14. In the following, an information model acquisition control process will be described.

### Information model acquisition control process

The acquisition unit 15a performs the information model acquisition control process. For example, the acquisition unit 15a acquires the information model I1 that is the first information model obtained by structuring the equipment data related to one or more pieces of the subsea equipment 40 installed on the seabed. Furthermore, the acquisition unit 15a acquires the information model I1 (XML). At this time, the acquisition unit 15a acquires the information model I1 (XML) that has been generated by the subsea gateway 20 by structuring the pieces of equipment data collected from the subsea equipment 40 (40-1, 40-2, 40-3, and ... ).

A specific example of the information model acquisition control process will be described. Firstly, the acquisition unit 15a stores {the first information model: "IM001-XML"} as the information model I1 that has been generated by the subsea gateway 20 that is identified by "GW001". Secondly, the acquisition unit 15a stores the acquired information model I1 in the first information model storage unit 14a.

### 2-2-5-2. Conversion unit 15b

The conversion unit 15b sets various kinds of information. Moreover, the conversion unit 15b may store the converted various kinds of information in the storage unit 14. Furthermore, the conversion unit 15b may refer to the various kinds of information stored in the storage unit 14. In the following, an information model conversion control process will be described.

### Information model conversion control process

The conversion unit 15b performs the information model conversion control process. For example, the conversion unit 15b converts the acquired information model I1 to the information model I2 that is the second information model that is generated in a predetermined file format and in which the controller 30 that controls one or more pieces of the subsea equipment 40 is able to read write. At this time, the information model I2 conforms to the OPC 30020 MDIS OPC-UA companion specification. Furthermore, the conversion unit 15b converts the acquired information model I1 to the information model I2 (CSV). Furthermore, the conversion unit 15b converts the acquired information model I1 to the information model I2 (IG) that is generated in the graphic file format supported by the controller 30.

A specific example of the information model conversion control process will be described. Firstly, the conversion unit 15b refers to {the first information model: "IM001-XML"} as the information model I1 that has been generated by the subsea gateway 20 that is identified by "GW001". Secondly, the conversion unit 15b inputs {the first information model: "IM001-XML"} to the integrated information server that is the software conforming to the OPC 30020 MDIS OPC-UA companion specification that is the standard specification, so that the conversion unit 15b converts {the first information model: "IM001-XML"} to {the second information model 1: "IM001-CSV"} as the information model I2 in a file format, such as a CSV format (for example, a CSV, XML, SQL, or JSON format may be exemplified, but the example is not particularly limited. Moreover, the file format is preferably be a CSV file format.). Thirdly, the conversion unit 15b inputs {the first information model: "IM001-XML"} to the integrated information server that is the software conforming to the OPC 30020 MDIS OPC-UA companion specification that is the standard specification, so that the conversion unit 15b converts {the first information model: "IM001-XML"} to {the second information model 1: "IM001-IG"} as the information model I2 (IG) generated in a graphic file format. Fourthly, the conversion unit 15b stores the converted information model I2 in the second information model storage unit 14b.

### 2-2-5-3. Release unit 15c

The release unit 15c releases various kinds of information. Moreover, the release unit 15c may refers to various kinds of information stored in the storage unit 14. In the following, a conversion information model release control process will be described.

### Conversion information model release control process

The release unit 15c performs the conversion information model release control process. For example, the release unit 15c releases the converted information model I2 to the controller 30. Furthermore, the release unit 15c releases the information model I2 to the controller 30 that detects an update of the equipment data. Furthermore, the release unit 15c displays the graphic of the equipment data indicated by the information model I2. Furthermore, the release unit 15c updates the data indicated in the information model I1 held by the subsea gateway 20, on the basis of the data that has been stored in the information model I2 and that has been updated by the controller 30.

A specific example of the conversion information model release control process will be described. Firstly, the release unit 15c refers to {the second information model 1: "IM001-CSV", and the second information model 2: "IM001-IG"} as the information model I2 that is obtained by converting the information model I1 that has been generated by the subsea gateway 20 that is identified by "GW001". Secondly, the release unit 15c releases {the second information model 1: "IM001-CSV"} as the information model I2 in a file format, such as a CSV format (for example, a CSV, XML, SQL, or JSON format may be exemplified, but the example is not particularly limited. Moreover, the file format is preferably be a CSV file format.). Thirdly, the release unit 15c displays {the second information model 1: "IM001-IG"} as the information model I2 (IG) in a graphic file format via the display unit 12.

### 2-3. Configuration example and process example related to subsea gateway 20

A configuration example and a process example related to the subsea gateway 20 will be described with reference to FIG. 2. For example, the subsea gateway 20 collects the pieces of equipment data that have been transmitted by the subsea equipment 40 (40-1, 40-2, 40-3, and ... ). Furthermore, the subsea gateway 20 structures the pieces of equipment data collected from the subsea equipment 40 (40-1, 40-2, 40-3, and ... ), and generates the information model I1 in a file format, such as an XML format (for example, an XML, CSV, SQL, or JSON format may be exemplified, but the example is not particularly limited. Moreover, the file format is preferably be an XML file format.).

### 2-4. Configuration example and process example related to controller 30

A configuration example and a process example related to the controller 30 will be described with reference to FIG. 2. For example, the controller 30 is implemented by the MCS that controls one or more pieces of the subsea equipment 40 or implemented by the DCS that controls various kinds of devices including the MCS. Furthermore, the controller 30 connects to the information model I2 that has been released by the management apparatus 10, and detects an update of the equipment data related to one or more pieces of the subsea equipment 40. Furthermore, in a case where the controller 30 has updated the equipment data that is related to one or more pieces of the subsea equipment 40 and that is included in the information model I2, the controller 30 transmits the updated equipment data to one or more pieces of the subsea equipment 40 via the subsea gateway 20 at regular intervals, at a timing determined by a program that has been constructed in the controller 30, or at an arbitrary timing determined by the operator O who operates the controller 30. Furthermore, the management apparatus 10 performs a process of writing data with respect to the data that is included in the information model I1 (XML) stored in the subsea gateway 20 and that corresponds to all of the pieces of data or the specific data included in the information model I2 (CSV) that has been updated as a result of the update data being written by the controller 30. Furthermore, the subsea gateway 20 performs a process of writing data with respect to the data that is stored in in the subsea equipment 40 (40-1, 40-2, 40-3, and ... ) that corresponds to the data that is stored in the information model I1 (XML) and that has been updated as a result of the update data being written by the management apparatus 10.

### 2-5. Configuration example and process example related to subsea equipment 40

A configuration example and a process example related to the subsea equipment 40 will be described with reference to FIG. 2. For example, the subsea equipment 40 is equipment that is used to produce petroleum or natural gas in the seabed. Furthermore, the subsea equipment 40 is equipment that is installed in the production facility for a subsea completion well, a pipeline, a manifold, or the like, and is implemented by a seabed resource production valve, a seabed resource production motor, or the like. Furthermore, the subsea equipment 40 transmits the equipment data to the subsea gateway 20. Here, the equipment data indicates the identification information and the state of one or more pieces of the subsea equipment 40.

### 3. Specific example of each process performed in subsea equipment management system 100

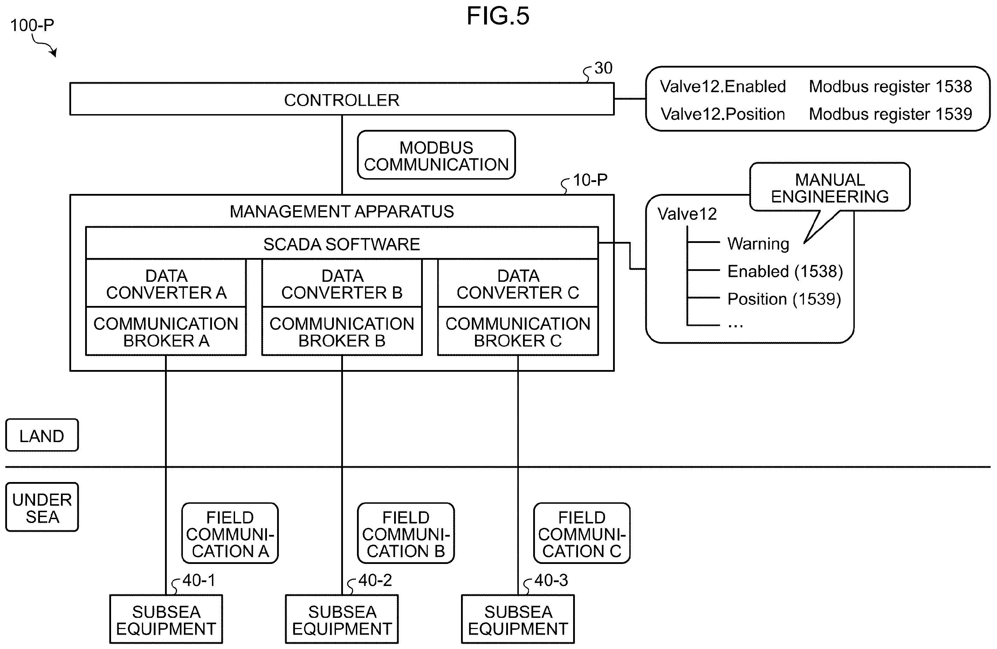

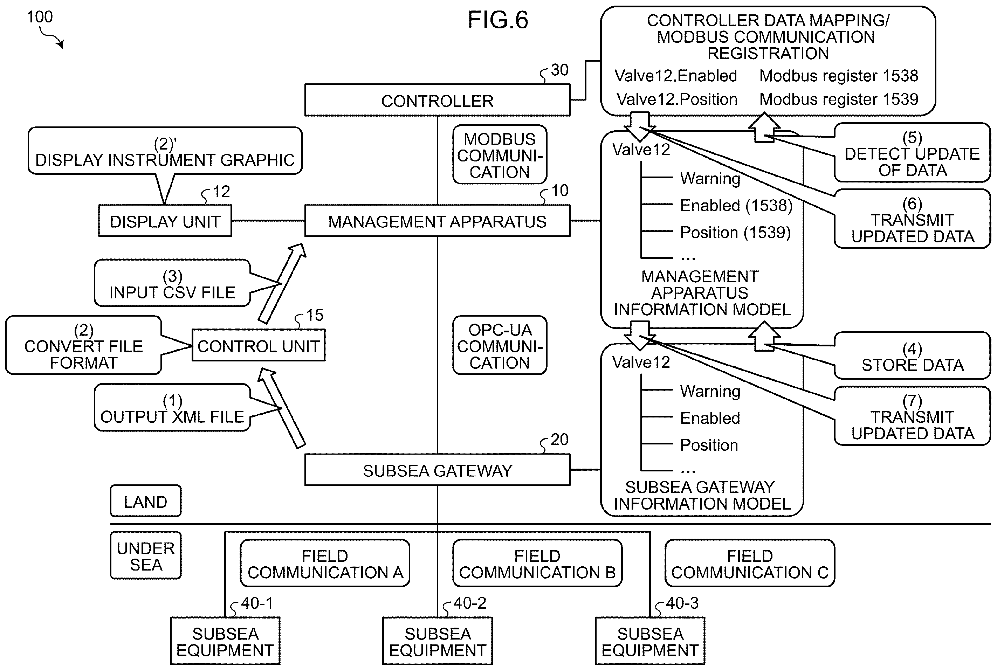

A specific example of each of the processes performed in the subsea equipment management system 100 according to the embodiment will be described with reference to FIG. 5 and FIG. 6. In the following, the specific example each of the processes performed in the subsea equipment management system 100-P according to the reference technology will be described first, and then, a specific example of each of the processes performed in the subsea equipment management system 100 will be described.

### 3-1. Specific example of each process performed in subsea equipment management system 100-P

A specific example of each of the processes performed in the subsea equipment management system 100-P according to the reference technology will be described with reference to FIG. 5. FIG. 5 is a diagram illustrating the specific example of each of the processes performed in the subsea equipment management system 100-P according to the reference technology. In the following, an example of a configuration of the subsea equipment management system 100-P will be described first, and then, an example of a process performed in the subsea equipment management system 100-P will be described.

### 3-1-1. Example of configuration of subsea equipment management system 100-P

An example of a configuration of the subsea equipment management system 100-P 'will be described. As illustrated in FIG. 5, the subsea equipment management system 100-P is constituted by a management apparatus 10-P, the controller 30, and the subsea equipment 40 (40-1, 40-2, and 40-3). The management apparatus 10-P and the controller 30 are installed in a vessel or an offshore facility that is provided on the seabed. The subsea equipment 40 is installed in the production facility that is installed in seawater.

In the example illustrated in FIG. 5, the management apparatus 10-P and the controller 30 are connected by using "modbus communication". Furthermore, the management apparatus 10-P and the controller 30 are sometimes connected by using OPC-Digital Access (DA) communication.

In the example illustrated in FIG. 5, the subsea equipment 40-1 is produced by a company A, and is connected by using "field communication A" that uses a communication protocol that is generated in a format and that is used in the company A. Furthermore, the subsea equipment 40-2 is produced by a company B, and is connected by using "field communication B" that uses a communication protocol that is generated in a format and that is used in the company B. Furthermore, the subsea equipment 40-3 is produced by a company C, and is connected by using "field communication C" that uses a communication protocol that is generated in a format and that is used in the company C.

In the example illustrated in FIG. 5, "SCADA software" is installed in the management apparatus 10-P. Furthermore, a "data converter A", a "data converter B", and a "data converter C" are installed in the management apparatus 10-P as the "SCADA software". Furthermore, a "communication broker A", a "communication broker B", and a "communication broker C" are installed in the management apparatus 10-P as the "SCADA software".

### 3-1-2. Example of process performed in subsea equipment management system 100-P

An example of the process performed in the subsea equipment management system 100-P will be described. As illustrated in FIG. 5, the management apparatus 10-P acquires the pieces of equipment data from the subsea equipment 40 (40-1, 40-2, 40-3) via the "SCADA software".

In the example illustrated in FIG. 5, the management apparatus 10-P receives the equipment data from the subsea equipment 40-1 via the "communication broker A" by using the "field communication A". Furthermore, the management apparatus 10-P receives the equipment data from the subsea equipment 40-2 via the "communication broker B" by using the "field communication B". Furthermore, the management apparatus 10-P receives the equipment data from the subsea equipment 40-3 via the "communication broker C" by using the "field communication C".

In the example illustrated in FIG. 5, the management apparatus 10-P converts and integrates the equipment data that has been received from the subsea equipment 40-1 via the "data converter A" to the information model in which the controller 30 is able to read and write. Furthermore, the management apparatus 10-P converts and integrates the equipment data that has been received from the subsea equipment 40-2 via the "data converter B" to the information model in which the controller 30 is able to read and write. Furthermore, the management apparatus 10-P converts and integrates the equipment data that has been received from the subsea equipment 40-3 via the "data converter C" to the information model in which the controller 30 is able to read and write.

In order to implement the example of the process illustrated in FIG. 5, the operator O needs to generate, one by one, "Warning" (with warning) that indicates whether or not a warning is issued, "Enabled" (in operation) that is an operational status, a "Position" (a degree of opening/closing of a valve) that is an operating status, and the like related to the state of the valve that corresponds to the subsea equipment 40 and that is indicated by the identification information related to a "Valve 12", as "manual engineering" of the "SCADA software".

Furthermore, the controller 30 receives "Valve 12. Enabled Modbus register 1538", "Valve 12. Position Modbus register 1539", or the like from the management apparatus 10-P by using the "modbus communication" as the equipment data on the valve that is the subsea equipment 40, and registers the received data.

### 3-2. Specific example of each process performed in subsea equipment management system 100

A specific example of each of the processes performed in the subsea equipment management system 100 according to the embodiment will be described with reference to FIG. 6. FIG. 6 is a diagram illustrating the specific example of each of the processes performed in the subsea equipment management system 100 according to the embodiment. In the following, an example of a configuration of the subsea equipment management system 100 will be described first, and then, an example of the process performed in the subsea equipment management system 100 will be described.

### 3-2-1. Example of configuration of subsea equipment management system 100

An example of the configuration of the subsea equipment management system 100 will be described. as illustrated in FIG. 6, the subsea equipment management system 100 is constituted by the management apparatus 10, the subsea gateway 20, the controller 30, and the subsea equipment 40 (40-1, 40-2, 40-3). The management apparatus 10, the subsea gateway 20, and the controller 30 are installed in a vessel or an offshore facility provided on the seabed. The subsea equipment 40 is installed in a production facility that is installed in seawater.

In the example illustrated in FIG. 6, the management apparatus 10 and the controller 30 are connected by using the "modbus communication". Furthermore, the management apparatus 10 and the controller 30 are sometimes connected by using the OPC-DA communication.

In the example illustrated in FIG. 6, the management apparatus 10 and the subsea gateway 20 are connected by using "OPC-UA communication".

In the example illustrated in FIG. 6, the subsea equipment 40-1 is produced by the company A, and is connected to the subsea gateway 20 by using the "field communication A" that uses the communication protocol that is generated in a format and that is used in the company A. Furthermore, the subsea equipment 40-2 is produced by the company B, and is connected to the subsea gateway 20 by using the "field communication B" that uses the communication protocol that is generated in a format and that is used in the company B. Furthermore, the subsea equipment 40-3 is produced by using the company C, and is connected to the subsea gateway 20 by the "field communication C" that uses the communication protocol that is generated in a format and that is used in the company C.

### 3-2-2. Example of process performed in subsea equipment management system 100

An example of the process performed in the subsea equipment management system 100 will be described. In the following, as an example of each of the processes, an output of an XML file, conversion of the file format, display of an instrument graphic, an input of a CSV file, storing of data, detection of an update of data, first transmission of updated data, and second transmission of updated data will be described.

### 3-2-2-1. Output of XML file

As indicated by (1) illustrated in FIG. 6, the subsea gateway 20 collects pieces of equipment data from the subsea equipment 40-1, the subsea equipment 40-2, and the subsea equipment 40-3, generates a "subsea gateway information model" that is the information model I1 (XML), and transmits the generated "subsea gateway information model" to the management apparatus 10.

### 3-2-2-2. Conversion of file format

As indicated by (2) illustrated in FIG. 6, the management apparatus 10 executes the integrated information server in the control unit 15, so that the management apparatus 10 converts the "subsea gateway information model" that is the information model I1 (XML) to the "management apparatus information model" that is the information model I2 (CSV).

### 3-2-2-3. Display of instrument graphic

As indicated by (2)' illustrated in FIG. 6, the management apparatus 10 executes the integrated information server in the control unit 15, so that the management apparatus 10 converts the "subsea gateway information model" that is the information model I1 (XML) to the "instrument graphic" that is the information model I2 (IG) generated in a graphic file format, and displays the converted information model I2 (IG) in the display unit 12. Here, the management apparatus 10 converts the information model I1 (XML) to a MDIS instrument graphic file as the information model I2 (IG) conforming to the OPC 30020 MDIS OPC-UA companion specification that is the standard specification and that can be referred to by, for example, the display function of the integrated information server.

### 3-2-2-4. Input of CSV file

As indicated by (3) illustrated in FIG. 6, the management apparatus 10 retrieves the "management apparatus information model" that is the converted information model I2 (CSV).

### 3-2-2-5. Storing of data

As indicated by (4) illustrated in FIG. 6, the management apparatus 10 stores the pieces of equipment data that have been collected from the subsea equipment 40 via the subsea gateway 20 in the information model I2 (CSV) in which the controller 30 is able to read and write. The information model I2 (CSV) has been converted from the information model I1 (XML). Furthermore, for example, in a case where the subsea equipment 40 is a valve, each of the pieces of equipment data related to "Warning (whether or not the valve issues a warning)", "Enabled (whether or not the valve is operating)", and "Position (a degree of opening/closing of the valve)" is stored in the information model I1 (XML) and the information model I2 (CSV). Furthermore, the management apparatus 10 releases the pieces of stored equipment data by using an address in the protocol format (for example, modbus communication or OPC-DA communication) that is used in a predetermined network and in which the controller 30 that is the higher level system is able to read and write. As a result of this, a communication path that will be described later and that is used to perform detection of an update of data and perform transmission of updated data between the management apparatus 10 and the controller 30 is established.

### 3-2-2-6. Detection of update of data

As indicated by (5) illustrated in FIG. 6, the controller 30 connects to the released address, and periodically checks whether or not the pieces of equipment data stored in the information model I2 (CSV) have been updated. In a case where the controller 30 detects an update of the pieces of equipment data stored in the information model I2 (CSV), the controller 30 acquires the updated equipment data.

### 3-2-2-7. First transmission of updated data

As indicated by (6) illustrated in FIG. 6, in a case where the controller 30 has updated the equipment data that is related to one or more pieces of the subsea equipment 40 and that is included in the information model I2 (CSV), the controller 30 transmits the updated equipment data to one or more pieces of the subsea equipment 40 via the subsea gateway 20 at regular intervals, at a timing determined by a program that has been constructed in the controller 30, or at an arbitrary timing determined by the operator O who operates the controller 30.

### 3-2-2-8. Second transmission of updated data

As indicated by (7) illustrated in FIG. 6, the management apparatus 10 transmits the pieces of equipment data that have been updated by the controller 30, that are related to one or more pieces of the subsea equipment 40, and that are included in the information model I2 (CSV) to the subsea gateway 20.

### 4. Flow of each process performed in subsea equipment management system 100

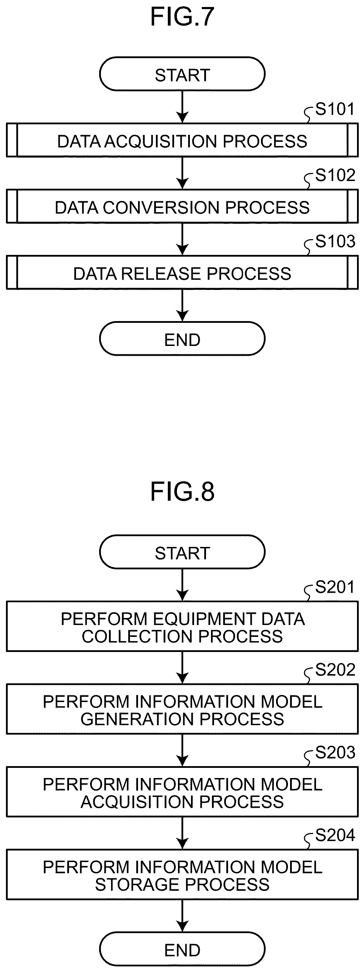

The flow of the process performed in the subsea equipment management system 100 according to the embodiment will be described with reference to FIG. 7 to FIG. 10. In the following, the overall flow of the process performed in the subsea equipment management system 100 will be described first, and then, a data acquisition process, a data conversion process, and a data release process will be described as each of the processes.

### 4-1. Overall process performed in subsea equipment management system 100

The flow of the overall process performed in the subsea equipment management system 100 according to the embodiment will be described with reference to FIG. 7. FIG. 7 is a flowchart illustrating one example of the overall process performed in the subsea equipment management system 100 according to the embodiment. Moreover, the processes performed at Steps S101 to S103 described below may be performed in different order. Furthermore, some of the processes performed at Steps S101 to S103 described below may be omitted.

### 4-1-1. Data acquisition process

At a first step, the subsea equipment management system 100 performs the data acquisition process (Step S101). For example, the subsea equipment management system 100 acquires the information model I1 (XML) that has been obtained by structuring the pieces of equipment data related to the subsea equipment 40 by performing the processes that are performed at Steps S201 to S204 and that will be described later.

### 4-1-2. Data conversion process

At a second step, the subsea equipment management system 100 performs a data conversion process (Step S102). For example, by performing the processes at Steps S301 to S304 that will be described later, the subsea equipment management system 100 converts the information model I1 (XML) to the information model I2 (CSV) in a file format that the controller 30 is able to read and write.

### 4-1-3. Data release process

At a third step, the subsea equipment management system 100 performs the data release process (Step S103), and ends the process. For example, the subsea equipment management system 100 releases the converted information model I2 (CSV) by performing the processes at Steps S401 to S404 that will be described later.

### 4-2. Data acquisition process

The flow of the data acquisition process performed in the subsea equipment management system 100 according to the embodiment will be described with reference to FIG. 8. FIG. 8 is a flowchart illustrating one example of the flow of the data acquisition process performed in the subsea equipment management system 100 according to the embodiment. Moreover, the processes performed at Steps S201 to S204 described below may be performed in different order. Furthermore, some of the processes performed at Steps S201 to S204 described below may be omitted.

### 4-2-1. Equipment data collection process

At a first step, the subsea gateway 20 performs the equipment data collection process (Step S201). For example, the subsea gateway 20 collects the pieces of equipment data transmitted from each of one or more pieces of the subsea equipment 40 via the field communication.

### 4-2-2. Information model generation process

At a second step, the subsea gateway 20 performs the information model generation process (Step S202). For example, the subsea gateway 20 structures the collected pieces of equipment data, and generates the information model I1 (XML).

### 4-2-3. Information model acquisition process

At a third step, the management apparatus 10 performs the information model acquisition process (Step S203). For example, the subsea gateway 20 acquires the information model I1 (XML) that has been transmitted by the subsea gateway 20.

### 4-2-4. Information model storage process

At a fourth step, the management apparatus 10 performs the information model storage process (Step S204), and ends the data acquisition process. For example, the management apparatus 10 stores the acquired information model I1 (XML) in the first information model storage unit 14a.

### 4-3. Data conversion process

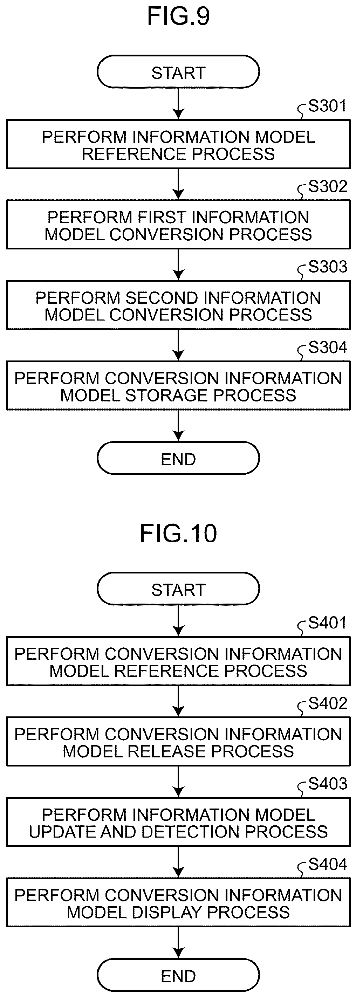

The flow of the data conversion process performs in the subsea equipment management system 100 according to the embodiment will be described with reference to FIG. 9. FIG. 9 is a flowchart illustrating one example of the flow of the data conversion process performed in the subsea equipment management system 100 according to the embodiment. Moreover, the processes performed at Steps S301 to S304 described below may be performed in different order. Furthermore, some of the processes performed at Steps S301 to S304 described below may be omitted.

### 4-3-1. Information model reference process

At a first step, the management apparatus 10 performs the information model reference process (Step S301). For example, the management apparatus 10 refers to the information model I1 (XML) that is stored in the first information model storage unit 14a.

### 4-3-2. First information model conversion process

At a second step, the management apparatus 10 performs the first information model conversion process (Step S302). For example, the management apparatus 10 converts the information model I1 (XML) to the information model I2 (CSV) that conforms to the OPC 30020 MDIS OPC-UA companion specification and that the controller 30 is able to read and write.

### 4-3-3. Second information model conversion process

At a third step, the management apparatus 10 performs the second information model conversion process (Step S303). For example, the management apparatus 10 converts the information model I1 (XML) to the information model I2 (IG) that conforms to the OPC 30020 MDIS OPC-UA companion specification and that is generated in a MDIS instrument graphic file format supported by the controller 30.

### 4-3-4. Conversion information model storage process

At a fourth step, the management apparatus 10 performs the conversion information model storage process (Step S304), and ends the data conversion process. For example, the management apparatus 10 stores the information model I2 (CSV) and the information model I2 (IG) as the conversion information model in the second information model storage unit 14b.

### 4-4. Data release process

The flow of the data release process performed in the subsea equipment management system 100 according to the embodiment will be described with reference to FIG. 10. FIG. 10 is a flowchart illustrating one example of the flow of the data release process performed in the subsea equipment management system 100 according to the embodiment. Moreover, the processes performed at Steps S401 to S404 described below may be performed in different order. Furthermore, some of the processes performed at Steps S401 to S404 described below may be omitted.

### 4-4-1. Conversion information model reference process

At a first step, the management apparatus 10 performs the conversion information model reference process (Step S401). For example, the management apparatus 10 refers to the information model I2 (CSV) and the information model I2 (IG), as the conversion information model, that are stored in the second information model storage unit 14b.

### 4-4-2. Conversion information model release process

At a second step, the management apparatus 10 performs the conversion information model release process (Step S402). For example, the management apparatus 10 releases the information model I2 (CSV) as the conversion information model to the controller 30. At this time, the management apparatus 10 releases the information model I2 (CSV) by using an address in the protocol format that is used in the network and in which the controller 30 is able to read and write.

### 4-4-3. Information model update and detection process

At a third step, the controller 30 performs the information model update and detection process (Step S403). For example, the controller 30 connects to the released information model I2 (CSV), and, in a case where the equipment data has been updated, detects the update, and acquires the detected equipment data. Furthermore, in a case where the equipment data included in the information model I2 (CSV) has been updated, the controller 30 transmits the updated equipment data to the subsea equipment 40 via the subsea gateway 20.

### 4-4-4. Conversion information model display process

At a fourth step, the management apparatus 10 performs the conversion information model display process (Step S404), and ends the data release process. For example, the management apparatus 10 causes the display unit 12 to display the information model I2 (IG) as the conversion information model on the display or the like, and notifies the operator O of the equipment data.

### 5. Effects of embodiment

Effects of the embodiment will be described. In the following, first to tenth effects corresponding to the processes according to the embodiment will be described.

### 5-1. First effect

As a first effect, in the embodiment, the management apparatus 10 acquires the information model I1 obtained by structuring pieces of equipment data related to one or more pieces of the subsea equipment 40 installed on the seabed, converts the acquired information model I1 to the information model I2 that is generated in the predetermined file format and to which the controller 30 that controls one or more pieces of the subsea equipment 40 is able to connect, and releases the converted information model I2 to the controller 30. As a result of this, in the embodiment, it is possible to improve efficiency of building and modifying the subsea equipment management system 100 that includes the subsea equipment 40 and the controller 30.

### 5-2. Second effect

As a second effect, in embodiment, the management apparatus 10 acquires the information model I1 (XML). As a result of this, in the embodiment, by converting the information model I1 (XML) to the predetermined file format, it is possible to improve efficiency of building and modifying the subsea equipment management system 100 that includes the subsea equipment 40 and the controller 30.

### 5-3. Third effect

As a third effect, in the embodiment, the management apparatus 10 converts the information model I1 (XML) to the information model I2 (CSV) or to the information model I2 (IG) that is generated in the graphic file format based on the XML format supported by the controller 30. As a result of this, in the embodiment, by converting the information model I1 (XML) to the predetermined information model I2 (CSV) or the predetermined information model I2 (IG), it is possible to improve efficiency of building and modifying the subsea equipment management system 100 that includes the subsea equipment 40 and the controller 30.

### 5-4. Fourth effect

As a fourth effect, in the embodiment, the information model I2 is formed to have the data structure that is generated in the predetermined file format and in which the data that can be updated by the controller 30 is stored. As a result of this, in the embodiment, by storing the information model I2 that is able to be updated by the controller 30, it is possible to improve efficiency of building and modifying the subsea equipment management system 100 that includes the subsea equipment 40 and the controller 30.

### 5-5. Fifth effect

As a fifth effect, in the embodiment, the management apparatus 10 updates the data stored in the information model I1 held by the subsea gateway 20, on the basis of the data that has been stored in the information model I2 and that has been updated by the controller 30. As a result of this, in the embodiment, by updating the information model I1 held by the subsea gateway 20 on the basis of the information model I2 that has been updated by the controller 30, it is possible to improve efficiency of building and modifying the subsea equipment management system 100 that includes the subsea equipment 40 and the controller 30.

### 5-6. Sixth effect

As a sixth effect, in the embodiment, the management apparatus 10 releases the information model I2 to the controller 30 that detects an update of the equipment data. As a result of this, in the embodiment, by releasing the readable and writable data structure to the controller 30, it is possible to improve efficiency of building and modifying the subsea equipment management system 100 that includes the subsea equipment 40 and the controller 30.

### 5-7. Seventh effect

As a seventh effect, in the embodiment, the management apparatus 10 displays a graphic of the equipment data indicated by the information model I2. As a result of this, in the embodiment, by notifying the operator O of the equipment data related to the subsea equipment 40, it is possible to improve efficiency of control and monitoring the subsea equipment 40 performed in the subsea equipment management system 100.

### 5-8. Eighth effect

As an eighth effect, in the embodiment, the equipment data indicates the identification information and the state related to one or more pieces of the subsea equipment 40. As a result of this, in the embodiment, by easily understanding the subsea equipment 40, it is possible to improve efficiency of control and monitoring the subsea equipment 40 performed in the subsea equipment management system 100.

### 5-9. Ninth effect

As a ninth effect, in the embodiment, one or more pieces of the subsea equipment 40 is equipment that is used to produce petroleum or natural gas in the seabed. As a result of this, in the embodiment, by easily understanding the subsea equipment 40 that is installed in the production facility for petroleum or natural gas, it is possible to improve efficiency of control and monitoring the subsea equipment 40 performed in the subsea equipment management system 100.

### 5-10. Tenth effect

As a tenth effect, in the embodiment, the information model I2 conforms to the OPC 30020 MDIS OPC-UA companion specification. As a result of this, in the embodiment, by using the framework of the OPC-UA that is the standard specification, it is possible to improve efficiency of building and modifying the subsea equipment management system 100 that includes the subsea equipment 40 and the controller 30, and, at the same time, it is possible to improve efficiency of control and monitoring the subsea equipment 40 performed in the subsea equipment management system 100.

### 6. System

The flow of the processes, the control procedures, the specific names, and the information containing various kinds of data or parameters indicated in the above specification and drawings can be arbitrarily changed unless otherwise stated.

Furthermore, the components of each unit illustrated in the drawings are only for conceptually illustrating the functions thereof and are not always physically configured as illustrated in the drawings. In other words, the specific shape of a separate or integrated device is not limited to the drawings. Specifically, all or part of the device can be configured by functionally or physically separating or integrating any of the units depending on various loads or use conditions.

Furthermore, all or any part of each of the processing functions performed by each of the devices can be implemented by a CPU and by programs analyzed and executed by the CPU or implemented as hardware by wired logic.

### 7. Hardware

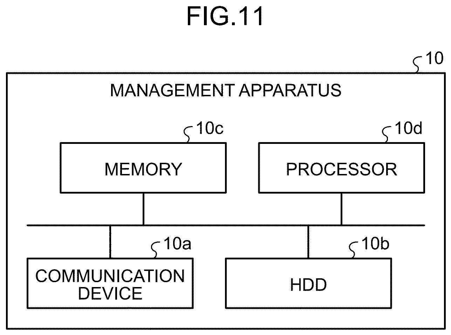

In the following, an example of a hardware configuration of the management apparatus 10 will be described with reference to FIG. 11. Moreover, the other devices may also be constituted to have a similar hardware configuration. FIG. 11 is a diagram illustrating an example of a hardware configuration according to the embodiment. As illustrated in FIG. 11, the management apparatus 10 includes a communication device 10a, a hard disk drive (HDD) 10b, a memory 10c, and a processor 10d. Furthermore, each of the units illustrated in FIG. 11 is connected by a bus or the like with each other.

The communication device 10a is a network interface card or the like, and performs communication with another server. The HDD 10b stores therein a database and a program that causes the functions illustrated in FIG. 2 to operate.

The processor 10d operates the process that executes each of the functions described above in FIG. 2 or the like by reading the program that executes the same processes as those performed by each of the processing units illustrated in FIG. 2 from the HDD 10b or the like and loading the read program in the memory 10c. For example, the process executes the same functions as those performed by each of the processing units included in the management apparatus 10. Specifically, the processor 10d reads, from the HDD 10b or the like, the program having the same functions as those performed by the acquisition unit 15a, the conversion unit 15b, the release unit 15c, and the like. Then, the processor 10d executes the same processes as those performed by the acquisition unit 15a, the conversion unit 15b, the release unit 15c, and the like.

As described above, the management apparatus 10 operates as a device that executes various processing methods by reading and executing the program according to the embodiment. Furthermore, the management apparatus 10 is also able to implement the same functions as those described above in the embodiment by reading the above described program from a recording medium by a medium reading device and executing the read program. In addition, the program according to embodiment need not always be executed by the management apparatus 10. For example, the present disclosure may also be similarly applied to a case in which another computer or another server executes the program or in a case in which another computer and another server cooperatively execute the program with each other.

The program according to the embodiment may be distributed via a network, such as the Internet. Furthermore, the program may be executed by being recorded in a computer readable medium, such as a hard disk, a flexible disk (FD), a CD-ROM, a magneto-optical disk (MO), or a digital versatile disk (DVD), and being read from the recording medium by the computer.

According to the present disclosure, an advantage is provided in that it is possible to improve efficiency of building and modifying the entire management system that includes subsea equipment and a controller.

## Claims

1. A management apparatus (10) comprising a processor, wherein the processor executes a process of
acquiring a first information model that is obtained by structuring pieces of equipment data related to one or more pieces of subsea equipment (40) installed on the seabed,
converting the acquired first information model to a second information model generated in a predetermined file format in which a controller (30) that controls the subsea equipment (40) is able to read and write, and
releasing the converted second information model to the controller (30).

2. The management apparatus (10) according to claim 1, wherein the processor acquires the first information model generated in an Extensible Markup Language (XML) file format.

3. The management apparatus (10) according to claim 1 or 2, wherein the processor converts the first information model to the second information model in a Comma-Separated Values (CSV) file format or in a graphic file format based on an XML format supported by the controller (30).

4. The management apparatus (10) according to any one of claims 1 to 3, wherein the second information model is formed to have a data structure that is generated in the predetermined file format and in which data that can be updated by the controller (30) is stored.

5. The management apparatus (10) according to any one of claims 1 to 4, wherein the processor updates the data stored in the first information model held by a subsea gateway (20) based on the data that has been stored in the second information model, that has been generated in the predetermined file format, and that has been updated in the controller (30).

6. The management apparatus (10) according to any one of claims 1 to 5, wherein the processor releases the second information model to the controller (30) that detects an update of the equipment data.

7. The management apparatus (10) according to any one of claims 1 to 6, wherein the processor displays a graphic of the equipment data indicated by the second information model.

8. The management apparatus (10) according to any one of claims 1 to 7, wherein the equipment data indicates identification information and a state related to the subsea equipment (40).

9. The management apparatus (10) according to any one of claims 1 to 8, wherein the subsea equipment (40) is equipment that is used to produce petroleum or natural gas in the seabed.

10. The management apparatus (10) according to any one of claims 1 to 9, wherein the second information model conforms to the Open Platform Communications (OPC) 30020 Master Control System (MCS) Distributed Control System (DCS) Interface Standardization (MDIS) Open Platform Communications-Unified Architecture (OPC-UA) companion specification.

11. A management method that causes a management apparatus (10) to execute a process, the process comprising:
acquiring a first information model that is obtained by structuring pieces of equipment data related to one or more pieces of subsea equipment (40) installed on the seabed;
converting the acquired first information model to a second information model generated in a predetermined file format in which a controller (30) that controls the subsea equipment (40) is able to read and write; and
releasing the converted second information model to the controller (30).

12. A management program that causes a management apparatus (10) to execute a process, the process comprising:
acquiring a first information model that is obtained by structuring pieces of equipment data related to one or more pieces of subsea equipment (40) installed on the seabed;
converting the acquired first information model to a second information model generated in a predetermined file format in which a controller (30) that controls the subsea equipment (40) is able to read and write; and
releasing the converted second information model to the controller (30).
